# EUROPEAN PATENT APPLICATION

(11) **EP 1 598 167 A1**
(43) Date of publication of application: **23.11.2005**
(21) Application number: 04447123.3
(22) Date of filing: 17.05.2004
(51) Int. Cl.: B29C 49/06, B65D 23/10, B29C 59/02, C08J 7/14

(54) **Process for producing hollow preforms, process for producing hollow containers, such plastic preforms and containers comprising a visible designed pattern on their surface**

(71) Applicant: THE PROCTER & GAMBLE COMPANY, Cincinnati, Ohio 45202 (US)
(72) Inventor: Jacobs, André Marie Gustav, 1982 Zemst (BE)
(74) Representative: Kellenberger, Jakob

(57) **Abstract**

The present invention relates to a process for producing a hollow plastic preform (1) suitable for blow molding a plastic container (6) comprising a visible designed pattern (7) on its surface, and to a plastic container (6) produced thereof. The process of the present invention allows achieving different aesthetics effects on the finished container and may additionally impart those containers with anti-slippery properties and/or pleasant tactile sensation.

## Description

### Technical field

The present invention relates to blow-molded articles, in particular it relates to a process of producing a blow-molded article comprising a visible designed pattern on its surface.

### Background of the invention

The use of plastic containers as a replacement for glass or metal containers in the packaging of a large variety of products has become increasingly popular. The advantages of plastic packaging include lighter weight, decreased breakage as compared to glass, and potentially lower costs. These containers can be made from a wide variety of thermoplastic materials such as polypropylene, polyethylene, polyethylene terephthalate, or polyvinyl chloride. One common method for making thermoplastic containers from such materials is by injection stretch blow molding, which typically includes the steps of forming by injection molding a tube of molten thermoplastic material with a neck and closed at the base (the "preform"), placing the preform inside a blow mold, expanding the preconditioned preform by either injecting a pressurized gas into the preform or by creating a vacuum around the preform, maintaining the preform in such an expanded state while it cools and solidifies, and removing the finished product.

The highly competitive nature of consumer-good products requires that the corresponding packaging containers be provided with a high visual distinctiveness. Solutions such as labeling, coloring, or coating the finished blow-molded articles that were firstly proposed for achieving such an effect, rapidly revealed their limitations as they turned to be insufficient in providing more efficient distinctiveness. Alternative processes capable of imparting three-dimensional shaped designs on the blow-molded articles were therefore proposed. Those decorative patterns were, in a first stage, molded into the corresponding containers during the blow molding process, i.e. the structural design of the container was shaped by specially designed blow molds. This alternative was then supplanted by processes wherein the desired shape design was imprinted directly onto the surface of the preforms before the blow-molding step.

WO-A-99/02324 describes a process of producing a blow molded plastic container comprising a shaped design on its surface, wherein the preform is subjected to a thermal energy to form the shaped feature on its outer surface before blow-molding. Similarly, WO-A-03/045665 discloses a method for printing on a plastic bottle, wherein the preform is first heated and then subjected to the action of a stamp with a temperature lower than the temperature of the heated preform. Patent application WO-A-01/47688 and US Patent No. 5,312,572 present a process for manufacturing hollow objects, wherein the preform is processed by applying a structure modification respectively of the surface roughness, said structural operation being strictly intended for better processing reasons. Although the structure modification can be applied by etching, visible designed patterns on the resulting object are neither pursued nor envisaged.

Problems associated with currently known methods for imparting visible designs on blow molded articles are excessive complexity, inconvenience, and high costs when implemented in a large production scale. In addition, the aforementioned thermal treatment of preforms might affect, if not damage, the structural integrity of the container. In some cases, those treatments might further alter transparency of the containers which is sometimes required. Moreover, the methods provided in the prior art fail to achieve fine sharp-textured patterns.

It is therefore the objective of the present invention to offer a solution to the above-mentioned problems. More specifically, it is an object of the present invention to provide a cheap and simple process of producing blow-molded plastic containers comprising a visible designed pattern on their surface. The process of the present invention allows obtaining plastic containers having finely textured pattern on their surface and therefore permits achieving different aesthetics effects on the finished container. Incidentally, the hollow plastic containers of the present invention are advantageously imparted with anti-slippery properties.

Other advantages and more specific properties of the hollow plastic preforms and containers according to the present invention will be clear after reading the following description of the invention.

### Summary of the invention

According to a first embodiment of the present invention, it is provided a process for producing a hollow plastic preform suitable for being blow molded into a plastic container comprising at least one visible designed pattern on the exterior and/or interior surface of the container. The process comprises the steps of injection molding a hollow plastic preform suitable for being blow molded into a plastic container, and then forming at least one designed pattern on the exterior and/or interior surface of the preform, wherein the designed pattern is formed by mechanically and/or chemically treating the exterior and/or interior surface of the preform. In another embodiment, the present invention relates to a hollow plastic preform produced according to the above-mentioned process for producing a hollow plastic preform.

In still another embodiment, the present invention is directed to a process for producing a plastic container comprising at least one visible designed pattern on its exterior and/or interior surface. The process comprises the steps of providing a preform obtained according to the above-mentioned process for producing a hollow plastic preform, and then blow molding the preform into a plastic container comprising at least one visible designed pattern on its exterior and/or interior surface. In yet a further aspect, the present invention also encompasses a plastic container obtained according to the above-mentioned process for producing a plastic container.

### Brief description of the drawings

Figure 1 shows a cross-sectional view of a preform (1) according to the present invention, the exterior surface (3) of which has been mechanically treated to form a designed pattern (2) consisting of parallel lines, wherein the wall thickness (5) of the preform and the depth of the applied designed pattern (2) have been deliberately exaggerated for the purpose of illustration.
Figure 2 is a schematic representation of a preform (1) having on its exterior surface (3) a designed pattern (2) consisting of parallel lines.
Figure 3 shows a cross-sectional view of a plastic container having on its surface a designed pattern (7) consisting of parallel lines, wherein the wall thickness (10) of the plastic container and the depth of the designed pattern (7) have been deliberately exaggerated for the purpose of illustration.
Figure 4 is a schematic representation of a plastic container (6) having on its surface a designed pattern (7) consisting of parallel lines.

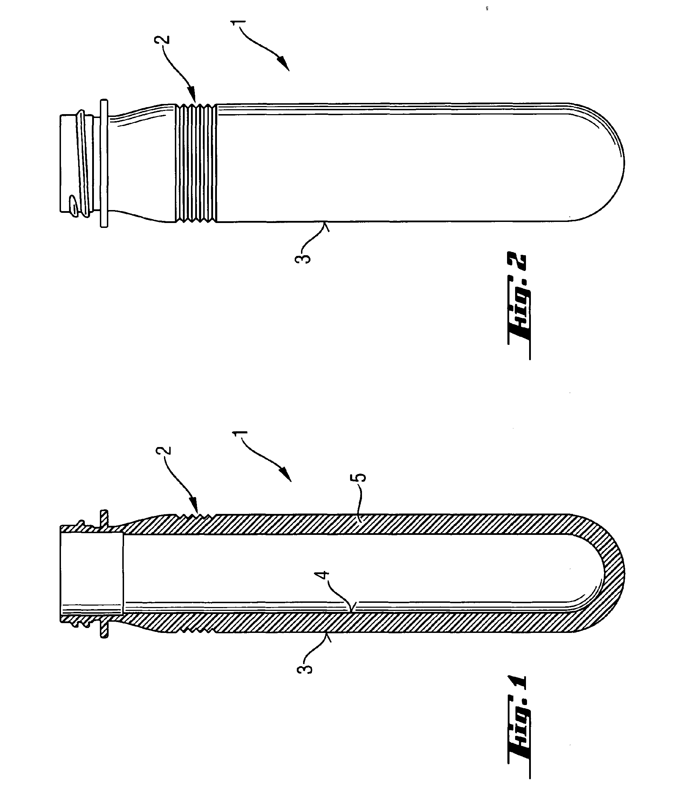

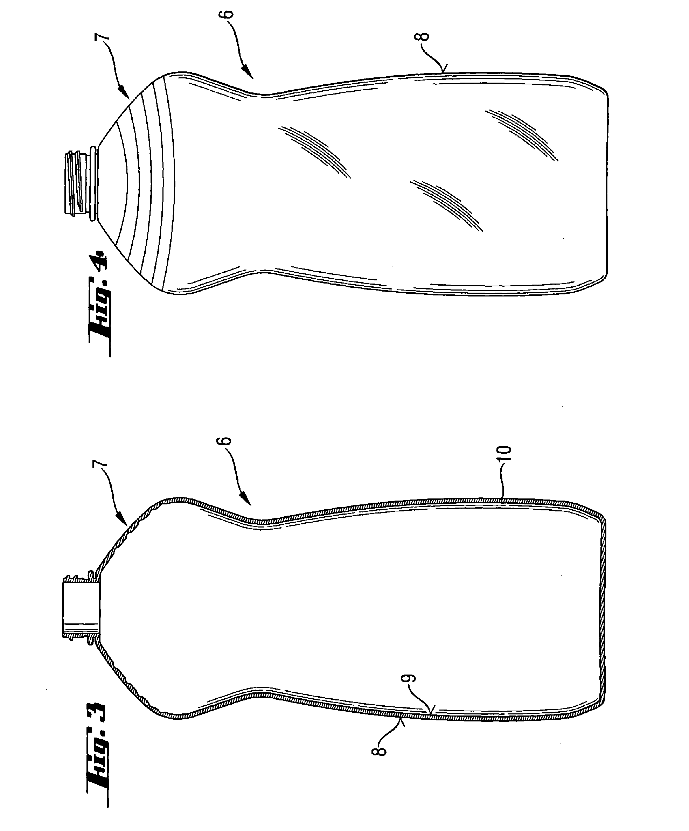

### Detailed description of the invention

In a first embodiment, the present invention relates to a process for producing a hollow plastic preform (1) suitable for being blow molded into a plastic container comprising at least one visible designed pattern (2) on the exterior (3) and/or interior (4) surface of the container.

The process comprises as a first step injection molding a hollow plastic preform (1) suitable for being blow molded into a plastic container. Preforms according to the present invention may be obtained by any conventional blow or injection molding techniques known to those skilled in the art, such as described e.g. in EP-A-686081. Suitable injection molding equipment may be for instance purchased from Husky Injection Molding Systems Ltd. Suitable materials for manufacturing the preform (1) are thermoplastic materials and in particular polymeric thermoplastic materials such as polystyrene, polypropylene, polyethylene terephthalate, polyethylene, polycarbonate, polyvinylchloride, acrylonitrile butadiene styrene, and combinations thereof. Particularly preferred material is polyethylene terephthalate.

In a second step, the obtained preform (1) is subjected to the forming of at least one designed pattern (2) on the exterior (3) and/or interior (4) surface of the preform (1) by mechanically and/or chemically treating the exterior (3) and/or interior (4) surface of the preform (1). In the context of the present invention, "mechanically and/or chemically treating the surface" is intended to designate the interaction of any mechanical and/or chemical means directly on the exterior (3) and/or interior (4) surface of the preform (1) which results in a surface modification.

In a preferred embodiment, the preform (1) of the present invention is subjected to a mechanical treatment.

Mechanical treatment according to the present invention may be preferably selected from the group consisting of carving, turning, milling, grinding, threading, drilling, screw-cutting, sandpapering, pressure-induced imprinting (e.g. notching), and combinations thereof. In a preferred embodiment of the present invention, the mechanical treatment is advantageously selected to be carving. The aforementioned methods, which are commonly used in the metalworking industry for surface modifications of metal pieces, may be implemented by using devices such as rolling mills, turning laths, milling systems, drilling systems, or any other devices well known to those skilled in the art of metal engineering. Examples of such devices may be found in the "Online Product Catalogue CoroGuide® 2004.1", available on website *www.coromant.sandvik.com*, or in "New tools from Sandvik Coromant, catalogue supplement 2004:1". Typically, devices such as Coroturn®, Corocut® or Coromill® available from Sandvik Coromant, may be suitable for applying the mechanical treatment according to the present invention. The present invention therefore describes the first application of these metalworking industry techniques to plastic items.

Chemical treatment according to the present invention may typically consist in applying a suitable acidic or alkaline composition onto a selected part of the exterior (3) and/or interior (4) surface of the preform (1). Preferably, the chemical treatment of the present invention consists in spraying an acidic or alkaline composition onto a selected part of the exterior (3) and/or interior (4) surface of the preform (1). Alternatively, the chemical treatment of the present invention may be applied by soaking a selected part of the exterior (3) and/or interior (4) surface of the preform (1) into an acidic or alkaline composition.

The mechanical and/or chemical treatment according to the present invention may be carried out following two alternative pathways. In a first route, the hollow plastic preform (1) may be placed in such a way that is allowed to rotate up to 360 degrees while being mechanically and/or chemically treated by a stationary device. Under these specific conditions, the preform (1) is typically placed in a lath, avaiIable e.g. from Staral. In an alternative route, the mechanical and/or chemical treatment device may this time be enabled to orbit up to 360 degrees around a stationary preform (1). These methods may in some cases result in preform material being displaced, removed or chemically transformed from its surface (e.g. carving, milling) whereas with other techniques the surface modification is applied without any thermoplastic material being removed or modified from the preform (1) such as pressure-induced imprinting. In any cases, the mechanical and/or chemical treatment according to the present invention are implemented in such a way that the structural integrity of the preform (1) and/or the resulting blow-molded container be not detrimentally affected, so as to avoid any perforation, tearing or distortion of the preform (1) and/or the plastic container (6) during processing.

More specifically, in a first embodiment the present invention relates to a process comprising the step of forming at least one designed pattern (2) on the exterior (3) and/or interior (4) surface of the preform (1). By "designed pattern", it is meant that the aforementioned mechanical and/or chemical treatment is not randomly applied to the exterior (3) and/or interior (4) surface of the preform (1) but results in an organized and desired shape or pattern (2) onto said preform surface. A large range of design features (2) may fall within the meaning of "designed pattern" according to the present invention. In its broadest definition, the latter expression is intended to represent any pattern capable of providing aesthetic effects and/or visual distinctiveness. Suitable patterns (2) may be selected from the group of parallel lines, crossed-lines, commercial logos, geometrical figures, images, shaped features, alphabetical characters, graphic signs, and combinations thereof. In a preferred embodiment of the present invention, the mechanical and/or chemical treatment may preferably result in the formation of a designed pattern selected from the group consisting of parallel lines and crossed-lines.

Furthermore, the mechanical and/or chemical treatment according the present invention shall be applied so that it results in forming a visible designed pattern (7) in the resulting blow molded plastic container (6). By "visible", it is meant herein that the designed pattern is readily apparent and discernible to the naked eye of an observer, without assistance of any enlargement apparatus. Accordingly, the designed pattern (2) may typically be applied in a depth of from 0.5mm to 2.5mm, into the preform exterior (3) and/or interior (4) surface, depending upon the desired visual and/or tactile effect. A preform (1) according to the present invention indeed typically exhibits a wall thickness (5) ranging from 3mm to 5mm.

In the context of the present invention, the suitable designed pattern (2) may be applied to any selected portion of the exterior (3) and/or interior (4) surface of the preform (1). However, in an alternative execution of the present invention, it might be desirable that the designed pattern (2) covers the entirety of the exterior (3) and/or interior (4) surface of the preform (1). In a preferred embodiment, the at least one designed pattern (2) is applied in that half of the preform exterior surface (3) which comprises the preform opening.

Therefore, the process according to the present invention allows obtaining hollow plastic preform (1) suitable for blow molding into a plastic container (6) comprising at least one visible designed pattern (7) on its exterior (8) and/or interior (9) surface. This process is highly convenient as it may be applied directly to any preform (1) manufactured according to techniques well known in the art, without requiring any pre-treatment of the preform (1). Moreover, the process of the present invention, which can be implemented at room temperature, does not necessitate further preparation of the surface modification device, such as heating, and does not involve any specially designed blow molds. The high convenience of the claimed process will positively affect the global cost of the whole manufacturing process, especially when the latter is implemented in a large production scale.

Another specific advantage/benefit associated with the process of the present invention, is that it may allow achieving very finely textured pattern (2) on the exterior (3) and/or interior (4) surface of the preform (1), and after blow molding, on the exterior (8) and/or interior (9) surface of the plastic container (6). This is permitted by the nature of the mechanical and/or chemical treatment applied to the preform (1). Indeed, methods like e.g. carving and screw-cutting, involve the use of knife-type or sharpened head implements. After suitable adjusting and setting, those implements allow forming tailor-made engraving with the precision achieved in the metal industry. As a beneficial consequence, these finely textured pattern (7) allow obtaining new and original aesthetic effects on the finished blow molded plastic container (6). It is unlikely that the finely textured pattern (7) obtained according to the process of the present invention could be achieved with the techniques described in the art such as heat-induced printing.

Still according to another aspect of the present invention, the process for producing a hollow plastic preform (1) comprising at least one visible designed pattern (2) on its exterior (3) and/or interior (4) surface may further comprise additional operational steps applied to the hollow plastic preform (1) before the latter be processed subsequently to plastic containers (6). Those operational steps may be any of the operations well known in the art. Operations which may be applied to at least a portion of the preform exterior (3) and/or interior (4) surface, are preferably selected from the group of printing, painting, applying a film patch, coating, labeling, wrapping, applying a sleeve, thermally induced imprinting, and combinations thereof. Particularly preferred operational steps are painting, printing and applying a film patch. Those operational steps may be carefully selected depending on the aesthetic effects that are pursued on the finished plastic container (6). In a specific embodiment of the present invention, the designed pattern (2) formed on the exterior (3) and/or interior (4) surface of the preform (1) may be colored by embedding a colorant. Additionally, a film patch or a label may be applied on the exterior surface (3) of the preform (1) using techniques well known in the art such as gluing.

In another embodiment, the present invention relates to a hollow plastic preform (1) comprising at least one visible designed pattern (2) on its exterior (3) and/or interior surface (4), the preform (1) being produced according to the above-mentioned process and suitable for being blow molded into a plastic container. The preform (1) according to this other embodiment of the present invention, after being mechanically and/or chemically treated may be stored for a prolonged period of time (e.g. up to one year) without being subjected to substantive alteration or unwanted modification, provided that normal conditions of storage and temperature are respected. As a consequence, it is not needed that the treated preform (1) be processed by blow molding into a plastic container (6) immediately after being mechanically and/or chemically treated. This particular feature provides broader latitude as for the industrial processing of decorated plastic containers since the first preform treatment step and the second blow molding step may be operated at largely separated time and in separate geographical locations.

In still another execution of the present invention, it is provided a process for producing a plastic container (6) comprising at least one visible designed pattern (7) on its exterior (8) and/or interior (9) surface. The process comprises the steps of providing a hollow plastic preform (1) according to the previously mentioned embodiment, and subsequently blow molding the preform (1) into a plastic container (6) comprising at least one visible designed pattern (7) on its exterior (8) and/or interior (9) surface. The step of blow molding may be carried out using any conventional blow molding techniques known to those skilled in the art, such as described e.g. in EP-A-662037. Suitable blow molding equipment may be for instance purchased from Sidel Inc. In a specific embodiment of the present invention, the preform (1) is prior heated to a determined blowing temperature typically comprised between 80°C and 120°C, preferably between 100°C and 110°C, then blow molded and biaxially oriented by injection stretch blow molding in a suitable blow mold in order to achieve the desired plastic container (6). The blowing operation is usually carried out in two steps: a first blowing pressure (typically comprised between 5 bar and 20 bar) is applied for preforming the plastic container followed by a second blowing pressure (typically comprised between 20 bar and 40 bar) for finalizing the shaping of the plastic container (6). Depending on the shape of the blow mold which is used, a broad range of plastic containers may be obtained. Particularly preferred containers are those of the bottle type used for packaging food and beverages, and those receptacles intended for storing cleaning compositions such as e.g. liquid detergent compositions, and fabric softening compositions.

In yet another embodiment, the present invention is directed to a plastic container (6) comprising at least one visible designed pattern (7) and produced according to the above-mentioned process. However, and similarly to what was previously described for the plastic preform (1), the hollow plastic container (6) of the present invention may further be subjected to additional operational steps applied onto its surface. Those operational steps which may be applied to at least a portion of the container exterior (8) and/or interior (9) surface, are preferably selected from the group of printing, painting, applying a film patch, coating, labeling, wrapping, applying a sleeve, thermally induced imprinting, and combinations thereof. Particularly preferred operational steps are painting, printing and applying a film patch.

As previously stated, the plastic container (6) according to the present invention allows achieving a broad range of aesthetical effects which therefore impart that container (6) with a high visual distinctiveness when compared to currently available plastic containers. Moreover, the present invention due to the specific mechanical and/or chemical treatments that are used permits obtaining hollow plastic containers (6) having finely textured pattern (7) on their exterior (8) and/or interior (9) surface. Incidentally, the plastic container (6) of the present invention may be imparted with anti-slippery properties when hold by the user. Indeed, depending on the nature, the depth and the placement of the chosen designed pattern (7) into the plastic container surface, improved handgrip and/or pleasant tactile sensation may be achieved.

### EXAMPLES

### Example 1: Manufacture of a hollow plastic preform comprising a designed pattern consisting of parallel lines.

A polyethylene terephthalate preform was formed following known injection molding manufacturing procedure and using an injection molding equipment supplied by Husky Ltd. The obtained preform was then placed in a lath (supplied by Staral S.A.) and submitted to carving action using a chesil, so that to form parallel lines on the exterior surface of the preform, the parallel lines being perpendicular to the preform longitudinal axis.

### Example 2: Manufacture of a hollow plastic preform comprising a designed pattern consisting of crossed lines.

A polyethylene terephthalate preform was formed following known injection molding manufacturing procedure and using an injection molding equipment supplied by Husky Ltd. The obtained preform was then placed in a lath (supplied by Staral S.A.) and submitted to notching action using a serrated knife so that to form a crosslinked-lines pattern on the exterior surface of the preform.

### Example 3: Manufacture of a hollow plastic preform comprising a designed pattern consisting of a milky appearance strip

A polyethylene terephthalate preform was formed following known injection molding manufacturing procedure and using an injection molding equipment supplied by Husky Ltd. The obtained preform was then placed in a lath (supplied by Staral S.A.) and submitted to the action of sandpaper so that to form a strip pattern having a milky appearance on the exterior surface of the preform.

The above mentioned preforms were fed into a regular blow molding equipment (supplied by Sidel Inc.) during a typical bottle production. The preforms were then prior heated to a blowing temperature of 105°C, and then blow molded and biaxially oriented by injection stretch blow molding to form the corresponding plastic container in function of the selected blow mold.

## Claims

1. A process for producing a hollow plastic preform (1) suitable for being blow molded into a plastic container (6) comprising at least one visible designed pattern (6) on the exterior (8) and/or interior (9) surface of said container (6), said process comprising the steps of:
a) injection molding a hollow plastic preform (1) suitable for being blow molded into a plastic container (6),
b) forming at least one designed pattern (2) on the exterior (3) and/or interior (4) surface of said preform (1),
**characterized in that** said at least one designed pattern (2) is formed by mechanically and/or chemically treating the exterior (3) and/or interior (4) surface of said preform.

2. A process according to claim 1 wherein said at least one designed pattern (2) is formed by mechanically treating the exterior (3) and/or interior (4) surface of said preform (1).

3. A process according to claim 2 wherein said mechanical treatment is selected from the group consisting of carving, milling, grinding, threading, drilling, screw-cutting, pressure-induced imprinting, and combinations thereof.

4. A process according to claim 3 wherein said mechanical treatment is selected to be carving.

5. A process according to any of the preceding claims wherein said mechanical and/or chemical treatment is preformed only on selected part of the preform exterior (3) and/or interior (4) surface.

6. A process according to any of the preceding claims wherein said preform (1) comprises a polymeric material selected from the group consisting of polyethylene terephthalate, polycarbonate, polypropylene, polyethylene, and combinations thereof.

7. A process according to any of the preceding claims wherein said at least one designed pattern (2) is selected from the group consisting of parallel lines, crossed-lines, image, commercial logos, geometrical figures, and combinations thereof.

8. A process according to any of the preceding claims wherein said preform (1) is further subjected to an operation selected from the group consisting of printing, painting, applying a film patch, coating, labelling, wrapping, sleeving, thermally induced imprinting, and combinations thereof.

9. A hollow plastic preform (1) comprising at least one designed pattern (2) on its surface, said preform (1) being obtained by a process according to any of the preceding claims.

10. A process for producing a plastic container (6) comprising at least one visible designed pattern (7) on the exterior (8) and/or interior (9) surface of said container (6) said process comprising the steps of:
a) providing a preform (1) according to claim 9,
b) blow molding said preform (1) into a plastic container (6) comprising at least one visible designed pattern (7) on the exterior (8) and/or interior (9) surface of said container.

11. A plastic container (6) comprising at least one visible designed pattern (7) on its exterior (8) and/or interior (9) surface, said container (6) being produced by a process according to claim 10.

12. A plastic container (6) according to claim 11 which is further subjected to an operation selected from the group consisting of printing, painting, applying a film patch, coating, labelling, wrapping, sleeving, thermally induced imprinting, and combinations thereof.
